# EUROPEAN PATENT APPLICATION

(11) **EP 2 108 994 A1**
(43) Date of publication of application: **14.10.2009**
(21) Application number: 08154290.4
(22) Date of filing: 09.04.2008
(51) Int. Cl.: G02F 1/13357, G09G 3/34

(54) **Display apparatus and method for controlling light output of the display apparatus**

(71) Applicant: Barco NV, 8500 Kortrijk (BE)
(72) Inventor: Declercq, Bjorn, 59150 Wattrelos (FR); Debonnet, Jeroen, 8510 Marke (BE); Groth, Gunter, 9000 Gent (BE)
(74) Representative: Bird, William Edward

(57) **Abstract**

To improve the quality of light emitted by a light source in a display apparatus (10) comprising a light source (20) and a light modulator (30), integral means (60) for measuring the colour characteristics of the light emitted from the light source (20) are provided, and controlling means (80) for controlling the light source and/or the light modulator in response to the measured colour characteristics of the light emitted from the light source (20).

## Description

### Technical field of the invention

The present invention relates to a display apparatus and a method for controlling the light output of the display apparatus.

### Background of the invention

Display apparatus or devices comprising a light source and a light modulator are known. Such display apparatus can include LCD screens. The LCD screens may be the same as the light modulator. The light source can be a backlight and can comprise such sources as a gas discharge lamp or an array of LEDs.

It is desirable to be able to provide a display apparatus which is able to reproduce colours with a specified accuracy and uniformity over the entire screen, and which has a very high luminance. It is also desirable for the display apparatus to have a wide, controllable and stable colour gamut. Light sources such as gas discharge lamps typically have a constant spectral shape and are therefore able to provide a certain degree of colour accuracy. Monitoring of the output of such light sources can be provided by the use of relatively simple three colour (rgb) sensors. However, it is more difficult to provide displays, having light sources such as LEDs, which exhibit colour accuracy. The accuracy can be affected by drift in both the power and spectral shape of the light output. This can be caused by environmental changes, such as temperature changes for instance. Also ageing of the light sources may cause such drift.

US-A1-2007/0097321 discusses how to measure the light intensity emitted by a light source in a display device and to control that light source in response to the measured intensity.

### Summary of the invention

It is desirable to provide an improved display apparatus which is able to measure the colour characteristics emitted by the light source and to be able to control the light source and/or the light modulator in response to that measurement.

This requirement is especially so for display apparatus which are used in broadcast monitors and other such display products which are required to reproduce colours with a highly specified accuracy.

The above objective is accomplished by a device and method according to the present invention.

In one aspect, the invention provides a display apparatus comprising a light source, a light modulator, means for measuring the colour characteristics of the light emitted from the light source, and controlling means for controlling driving of the light source and/or light modulator in response to the measured colour characteristics of the light emitted from the light source. The means for measuring the colour characteristics of the light emitted from the light source is integral with the light source and is non-intrusive in that, in use, it does not influence usable light output of the display apparatus

The apparatus may include determination means, for determining whether or not, and to what extent, adjustment of the light source and/or modulator is necessary. Such determination means may be incorporated into the control and/or measurement means, or may be separate therefrom.

The colour characteristics may include the wavelength of the emitted light and/or of individual components of the emitted light. However, other characteristics of the emitted light such as its intensity, frequency, phase and amplitude may also be measured. The light source may be one or more LEDs. Each LED may be individually, in groups, or collectively controllable by the controlling means.

The LEDs may be controllable in any suitable way, for example by means of pulse width modulation. The light source may be controlled to provide a predetermined, e.g. user-specified, "white point", i.e. the front of screen luminance and colour with the modulator completely open (full white). The white point is achieved by appropriately mixing light from the different LEDs. The resulting white light will yield the "display primaries", i.e. the front of screen luminance and colour when the modulator is driven at full level for the primary colours, e.g. red, green and blue, respectively. Knowledge of the display primaries is required to calculate the modulator drive level corresponding to a given front of screen luminance and colour. Display primaries cannot be directly measured from the front of the display without disturbing normal operation of the display apparatus. However, they can be calculated if both the spectral content of the light source and the spectral transfer characteristics of the modulator are known. The latter may be provided by the modulator manufacturer and/or may be determined or checked during calibration of the device. The former may be obtained by using means for measuring the colour characteristics of the light emitted from the light source, e.g. a spectroradiometer or a spectrometer, as the spectral content of the light source is not constant when LEDs are used as light sources. The spectroradiometer may provide information for calculating the x,y chromaticity values of the display panel primaries, e.g. R, G, B primaries, and the white point. These values can be used to modify the light source and/or to modify the drive levels of the light modulator. The white point primaries may be used in a backlight driver to adapt the amplitude of the backlight primaries.

The display apparatus may include an LCD display screen which may receive and allow some or all of the emitted light to pass through it. The light modulator may be the LCD display screen, or the apparatus may include more than one light modulator, one of which may be an LCD display screen. The display apparatus may also comprise a light diffuser located between the light source and the light modulator.

The integral means for measuring the colour characteristics of the light emitted from the light source may be located at the edge of the display apparatus, between the light source and the light modulator, such that, in use, it may be considered as non-intrusive in that it does not influence usable light output of the display apparatus.

The integral means for measuring the colour characteristics of the light emitted from the light source may be located at the edge of the display apparatus, between the light source and the light diffuser, such that, in use, it may be considered as non-intrusive in that it does not influence usable light output of the display apparatus.

The integral means may be located between the edges of the light source and the light modulator or light diffuser but be positioned such that it is outside of the usable area of light for the display. For instance, the area of the light source and/or modulator and/or diffuser may be larger than the area of the visible display screen, in use, such limitation of the area being provided, for example, by a frame provided around at least part of the display apparatus.

The integral means for measuring the colour characteristics of the light emitted from the light source may include a spectroradiometer and/or a spectrometer. The spectroradiometer and/or spectrometer may be designed to measure the spectral power distributions of the light emitted by the light source.

The display apparatus may include a light guide for guiding light from the light source to the integral means for measuring the colour characteristics of the light emitted from the light source. The light guide may be made of any suitable material such as acrylic glass (for example, Plexiglas, Perspex ®, or PMMA). The light guide may be an optical fibre. In alternative embodiments the light guide may be a mirror. The light guide may be positioned such that it receives stray light from within the cavity provided between the light source and light modulator/diffuser.

The spectroradiometer and/or spectrometer may be located on the other side of the light source compared to the light modulator, such that it is behind the light source from the perspective of a user viewing images on the display.

The means for measuring the colour characteristics of the light emitted from the light source may also measure the intensity of the light emitted from the light source.

The display apparatus may be a broadcast monitor.

The means for measuring and the means for controlling may be able to operate on a continuous basis such that continuous adjustment of the apparatus is possible. Alternatively, or additionally, the means for measuring and the means for controlling may be able to operate at other specific times such as at start-up, or by user-controlled selection.

In a second aspect, the present invention provides a backlight for a display device with an integrated non-intrusive spectral content measurement device. The backlight may be an LED backlight. The spectral content measurement device is for measuring the colour characteristics of the light emitted from the backlight. It may include a spectroradiometer and/or a spectrometer. The spectroradiometer and/or spectrometer may be designed to measure the spectral power distributions of the light emitted by the backlight. The spectroradiometer and/or spectrometer may be located on the side of the backlight destined to be oriented away from a light modulator.

In a third aspect, the present invention provides a non-intrusive, spectral content measurement device integrated into a backlight of a display apparatus. The backlight may be an LED backlight. The spectral content measurement device is for measuring the colour characteristics of the light emitted from the backlight. It may include a spectroradiometer and/or a spectrometer. The spectroradiometer and/or spectrometer may be designed to measure the spectral power distributions of the light emitted by the backlight. The spectroradiometer and/or spectrometer may be located on the side of the backlight destined to be oriented away from a light modulator.

In another aspect, the invention provides a method of controlling the light output of a display apparatus, comprising the steps of: providing a display apparatus as described herein; measuring the colour characteristics of the light source; determining how to control the light source and the light modulator in response to the measured colour characteristics; and controlling the light source and/or the light modulator.

The light source may be an array of LEDs and the step of controlling the light source may include the step of controlling each LED individually, in groups, or collectively.

The steps of measuring, determining and controlling may be continuous, during operation of the display apparatus, e.g. while showing images to be displayed to an audience, or may be carried out at specific times, e.g. at set-up or calibration.

In a further aspect, the invention provides a backlight for a display device comprising a light source and a non-intrusive means for measuring the colour characteristics of the light emitted from the light source.

The backlight may further comprise a light modulator, integral means for measuring the colour characteristics of the light emitted from the light source, controlling means for controlling the light source and/or the light modulator, and determination means for determining how the light source and/or the light modulator are controlled in response to the measured colour characteristics of the light emitted from the light source.

The light source or backlight may be a scanning backlight with edge-lit topology.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

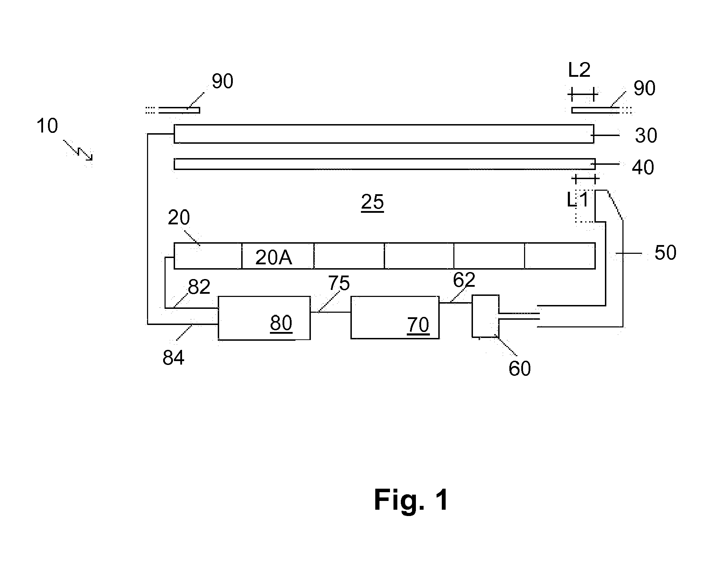

Fig. 1 is a schematic side view of a display device according to one embodiment of the present invention.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may refer to different embodiments. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

The term "colour characteristic of light" is to be understood as any, or all, of the frequency, amplitude and phase of the light, or of any component of the light.

The term "integral" is to be understood as being built into the apparatus so as to form a constituent part.

The term "non-intrusive" is to be understood as not reducing, affecting or influencing any light, emitted by the light source, from reaching the modulator and/or diffuser.

The term "control" or "controlling" is to be understood as the adjustment, or non-adjustment of the light source and/or the light modulator so as to maintain, or provide, a source of light, or display light characteristic having desired properties such as brightness, intensity, amplitude, frequency, phase, colour etc.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In Figure 1 a display apparatus 10 is shown schematically and edge-on. The apparatus 10 includes a light source 20. In this embodiment the light source 20 comprises a plurality of light trays 20A. Each light tray 20A comprises a plurality or array of LEDs. The array may be a regular or an irregular array.

The light emitted by the light source 20 is directed primarily towards a light modulator 30. This light modulator 30 comprises an LCD screen as is typically known in the art. The light incident on the LCD screen allows, through manipulation of the screen, for images to be formed on the outer (upper in Figure 1) surface. In this embodiment a light diffuser 40 is also present.

A cavity 25 exists between the light source 20 and light modulator 30. This cavity allows light emitted by the light source 20 to reach the light modulator 30. However, some of the light emitted by the light source 20 will typically be lost in that it is not incident on the light modulator 30 (or light diffuser 40) but is instead lost out of the edges of the cavity.

Figure 1 also has a light guide 50 with two ends. One end, the incident end, is present at the edge of the cavity 25 and receives light from the light source 20. This light is part of the lost light which would not be incident on the light modulator 30 or light diffuser 40. Accordingly, the light guide 50 is non-intrusive in that it does not affect, influence or reduce any of the light emitted by the light source 20 and directed at the light modulator 30 or light diffuser 40.

The light guide 50 can be made of acrylic glass such as Plexiglas, Perspex ®, or PMMA (Poly methyl methacrylate). However, any suitable substance may be used and is contemplated herein. In alternative embodiments the light guide may be an optical fibre. In yet alternative embodiments the light guide may be a mirror.

The light guide 50 is located such that its incident end is located at the extreme edge of the light source 20 and/or light modulator 30 such that it does not physically protrude into the cavity 25 between the two.

However, in one embodiment, the light guide 50 may protrude into the cavity between the light source 20 and light modulator 30 as shown by the broken lines protruding into the cavity 25. In the embodiment shown in Figure 1, the length of protrusion is referenced as "L1". This protrusion is acceptable because the outer area of the light modulator 30 has a frame 90 around its edge which reduces the usable area of the light modulator 30. This frame 90 extends over, to cover, the edge of the light modulator 30, directly in front of (above in Figure 1) the light source, by a distance "L2". If L2 is greater than, or equal to, L1 then the light guide 50 will not interfere with the emitted light from the light source 20 reaching the light modulator 30.

The light guide 50 guides light collected from the cavity 25 to a measurement means such as a spectroradiometer 60. This spectroradiometer 60 is integral with the apparatus 10, more particularly with the light source 20. The spectroradiometer 60 measures certain aspects and characteristics of the light collected by the light guide 50. These characteristics may be colour characteristics, such as wavelength, or other characteristics of the light such as phase, frequency and/or amplitude. The spectroradiometer 60 is adapted for measuring the spectral content of the incident light, typically by means of a few tens to a few hundreds of measurement values (power vs. wavelength) The spectroradiometer 60 is connected, typically by an electrical connection means 62, to a determination means 70 for assessing the measured characteristics. The interface between the spectroradiometer 62 and the determination means 70 can be low-level (a sequence of analog voltages) or high-level (e.g. a digital communication channel allowing readout of the measured and processed data), or anything in between. This assessment may be by way of comparison with predetermined values. These predetermined values may be pre-set following initial calibration of the apparatus, such as in the factory. Alternatively, or additionally, the predetermined values may be user-defined during use of the apparatus, for example, if the colour characteristics of the screen need to be adjusted for a particular application. The determination means 70 may have an input (not illustrated) for receiving pre-determined values. The determination may be based, in part at least, on the spectral content of the emitted light and/or the spectral transfer characteristics of the light modulator. The latter may be provided by the manufacturer of the light modulator and/or by calibration following manufacture.

The determination means 70 identifies whether or not any adjustment of the light source 20 is required. This may be on an individual LED basis, an individual light tray 20A basis, on the basis of another group of LEDs, or collectively for the whole array of LEDs.

The determination of the colour characteristics of each LED, light tray, other group, or collectively may be effected by operating only that LED, or group of LEDs with the other LEDs being switched off. This may be possible during the initialisation of the apparatus at start-up. It is also possible to effect this measurement during use if conducted at a fast enough speed for it not to be noticeable to a user.

The determination means 70 passes on instructions that adjustment is necessary, or that no adjustment is necessary depending on the circumstances, to the control means (controller) 80 by means of a connection 75. The determination means 70 can tell the controller 80 how to control the light source 20 and/or light modulator 30 such that the controller 80 then performs the necessary actions. Alternatively, or additionally, the determination means 70 can pass on to the controller 80 the discrepancies between the measured values and the required or pre-determined values and the controller 80 can then control the light source 20 and/or light modulator 30 to address those discrepancies.

The controller 80 can adjust aspects of the current and/or voltage supplied to the light source 20 (and to various individual or groups of LEDs) to control its light output and in particular to control its spectral power content. The control can for example be by way of pulse width modulation.

The controller 80 is shown in Figure 1 as being connected to the light source 20 by means of a connection 82, and to the light modulator 30 by means of a connection 84.

Although the various means 60, 70, 80 are shown as separate modules it is contemplated that any, or all, of these modules may be combined into one or more modules. For instance, the determination means 70 and the control means 80 may be embodied by a processor or CPU.

Although not shown, each light tray 20A can also comprise a monochrome light sensor (not illustrated) provided on its back side (i.e. on the side away from the light modulator 30). Furthermore, the display apparatus 10 can include at least one thermal sensor (not illustrated). These sensors can also be connected to the determination means 70 and/or control means 80 for inclusion in any determination of how to control and adjust the light source 20.

The measurement means 60, determination means 70 and control means 80 can, in one sense, be defined as a feedback loop, or calibration means.

Other arrangements for accomplishing the objectives of the apparatus and method embodying the invention will be obvious for those skilled in the art.

It is to be understood that although preferred embodiments, specific constructions and configurations, as well as materials, have been discussed herein for apparatus according to the present invention, various changes or modifications in form and detail may be made without departing from the scope of this invention as defined by the appended claims.

## Claims

1. A display apparatus (10) comprising a light source (20), a light modulator (30), means for measuring the colour characteristics of the light emitted from the light source, and controlling means (80) for controlling the light source and/or the light modulator in response to the measured colour characteristics of the light emitted from the light source, wherein the means (60) for measuring the colour characteristics of the light are integral with the light source (20) and are non-intrusive in that, in use, it does not influence usable light output of the display apparatus.

2. The display apparatus according to claim 1, wherein the light source (20) is one or more LED, each of which is individually, in groups (20A), or collectively controllable by the controlling means.

3. The display apparatus according to any one of claims 1 to 2, further including an LCD display screen.

4. The display apparatus according to any one of claims 1 to 3, wherein the integral means (60) for measuring the colour characteristics of the light emitted from the light source is located at the edge of the display apparatus, between the light source (20) and the light modulator (30).

5. The display apparatus according to any one of claims 1 to 4, further comprising a light diffuser (40) located between the light source (20) and the light modulator (30).

6. The display apparatus according to claim 5, wherein the integral means (60) for measuring the colour characteristics of the light emitted from the light source is located at the edge of the display apparatus, between the light source (20) and the light diffuser (40).

7. The display apparatus according to any one of claims 1 to 6, wherein the integral means for measuring the colour characteristics of the light emitted from the light source includes a spectroradiometer.

8. The display apparatus according to claim 7, further comprising a light guide (50) for guiding light from the light source (20) to the spectroradiometer (60).

9. The display apparatus according to either one of claims 7 and 8, wherein the spectroradiometer is located on the other side of the light source from the light modulator.

10. The display apparatus according to any one of claims 1 to 9, wherein the means for measuring (60) the colour characteristics of the light emitted from the light source (20) also measures the intensity of the light emitted from the light source.

11. The display apparatus according to any one of claims 1 to 10, wherein the means for measuring (60), the means for controlling (80) and the means for determining (70) are able to operate on a continuous basis.

12. A backlight for a display device with an integrated non-intrusive spectral content measurement device.

13. A method of controlling the light output of a display apparatus, comprising the steps of: providing a display apparatus (10) according to any one of claims 1 to 11, measuring the colour characteristics of the light source, determining how to control the light source (20) and the light modulator (30) in response to the measured colour characteristics, and controlling the light source and/or the light modulator.

14. The method of claim 13, wherein the light source is an array of LEDs and the step of controlling the light source includes the step of controlling each LED individually, in groups, or collectively.

15. The method of either one of claims 13 or 14, wherein the steps of measuring, determining and controlling are continuous.
